# FASCICULE DE BREVET EUROPEEN

(11) **EP 2 019 007 B1**
(45) Date de publication et mention de la délivrance du brevet: **01.12.2010**
(21) Numéro de dépôt: 08305403.1
(22) Date de dépôt: 16.07.2008
(51) Int. Cl.: B60S 1/50, B60Q 1/00

(54) **Projecteur de véhicule**
Fahrzeugscheinwerfer
Vehicle headlight

(30) Priorité: 23.07.2007 FR 0756673
(43) Date de publication de la demande: 28.01.2009
(73) Titulaire: Peugeot Citroën Automobiles SA, 78140 Vélizy-Villacoublay (FR)
(72) Inventeur: Bouret, Pascal, 78610, LES BREVIAIRES (FR); Rougetet, Olivier, 92800, PUTEAUX (FR)

(56) Documents cités:
- FR-A- 2 578 211
- FR-A- 2 712 547
- FR-A- 2 894 221

## Description

La présente invention est relative aux projecteurs de véhicule.

Plus particulièrement, l'invention concerne les projecteurs du type qui comportent un boîtier délimitant une cavité interne prévue pour recevoir une source lumineuse, le boîtier comportant une zone frontale de passage de lumière et une zone arrière prévue pour être couverte par une carrosserie, le projecteur étant destiné à être monté au voisinage d'une portion tubulaire d'un équipement du véhicule distinct du projecteur, telle qu'un conduit de remplissage d'un réservoir de liquide de lave glace.

Un tel projecteur est connu du document FR 2 894 221.

Un autre projecteur est divulgué dans le document FR2712547 dans lequel le boîtier du projecteur est traversé verticalement par un tube. Le tube est dédié au remplissage d'un réservoir de liquide de lave-glace. Un court conduit raccordé à une paroi supérieure du réservoir est, sous le boîtier, solidarisé avec un tronçon d'extrémité inférieure du tube. Un embout conique pourvu d'un bouchon est, au-dessus du boîtier, solidarisé avec un tronçon d'extrémité supérieure du tube.

Un inconvénient d'un tel tube traversant le boîtier du projecteur est que l'espace occupé par le tube impose des contraintes pour la conception du réflecteur. De plus, l'espace occupé par le tube nuit à la compacité du boîtier, en particulier dans le cas d'un projecteur à réflecteur unique, à l'inverse de l'exemple de réalisation du document FR2712547 dans lequel le tube est situé entre deux projecteurs.

Un autre inconvénient d'un tel tube traversant le boîtier du projecteur est que le réservoir et son tube de remplissage sont formés par une pluralité de pièces à fabriquer séparément et à assembler, au détriment du coût. De plus, il faut aménager des moyens d'étanchéité entre les pièces afin d'éviter tout passage de liquide dans le boîtier. L'association du boîtier du projecteur avec le réservoir est donc complexe.

La présente invention a notamment pour but de pallier ces inconvénients.

A cet effet, selon l'invention, le boîtier d'un projecteur du type ci-dessus comporte une patte d'accrochage de la portion tubulaire, la patte étant intégrée au boîtier et saillante par rapport à une paroi de la zone arrière pour recevoir et maintenir la portion tubulaire sensiblement perpendiculairement à la patte, la patte comportant en outre une zone de raccordement (38) avec le reste du boîtier (14), la zone de raccordement comportant une charnière (50).

Dans divers modes de réalisation du projecteur selon l'invention, on peut éventuellement avoir recours en outre à l'une et/ou à l'autre des dispositions suivantes :
- la patte comporte deux branches délimitant conjointement un contour sensiblement en C et prévues pour emboîter la portion tubulaire ;
- la patte comporte une zone de raccordement avec le reste du boîtier, la zone de raccordement comportant une charnière ;
- la charnière est une portion amincie de la zone de raccordement ;
- la patte est articulée par la charnière entre une position de service et une position repliée de stockage ;
- le boîtier comporte un crochet de maintien de la patte dans sa position repliée de stockage ;
- la patte est articulée par la charnière entre une position de moulage et une position de service ;
- le boîtier du projecteur est moulé avec la patte (30).

Par ailleurs, l'invention a également pour objet un sous-ensemble de véhicule comportant un projecteur selon

l'invention et un équipement distinct du projecteur, dans lequel l'équipement comporte une portion tubulaire qui coopère par emboîtement avec la patte d'accrochage.

Selon une caractéristique avantageuse du sous-ensemble, l'équipement est d'une part fixé sur le projecteur par l'intermédiaire de la patte d'accrochage et d'autre part relié à une partie de structure du véhicule.

Selon une caractéristique avantageuse du sous-ensemble, l'équipement est un réservoir de fluide et la portion tubulaire est un conduit de remplissage.

D'autres caractéristiques et avantages de l'invention apparaîtront au cours de la description suivante de plusieurs modes de réalisation, donnés à titre d'exemples non limitatifs, en regard des dessins joints.

Sur les dessins :

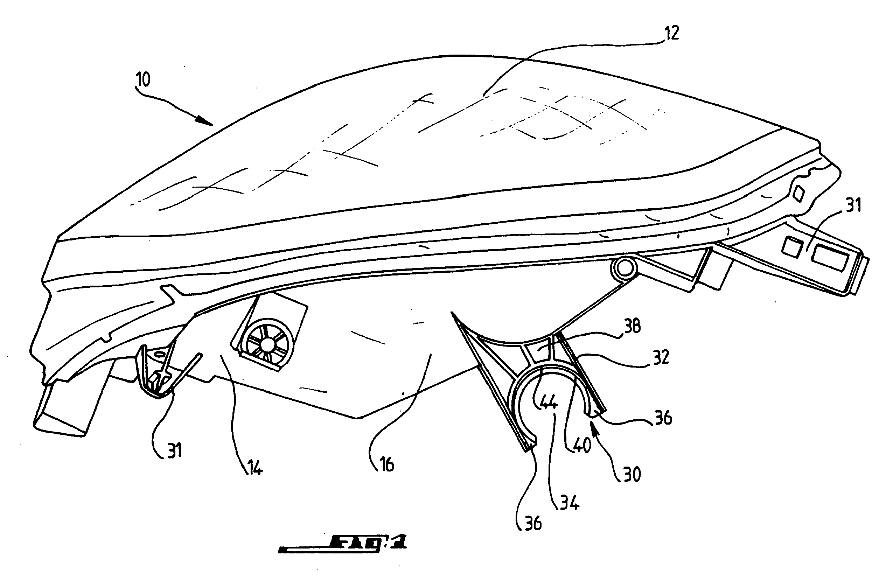

- la figure 1 est une vue en perspective d'un projecteur selon l'invention ;
- la figure 2 est une vue partielle en perspective d'un sous-ensemble selon l'invention ;
- la figure 3 est une vue en perspective d'un détail d'une première variante de réalisation du projecteur selon l'invention ;
- la figure 4 est une vue schématique de côté d'une patte du projecteur de la figure 3 dans une position de service ;
- la figure 5 est une vue schématique de côté d'une patte du projecteur de la figure 3 dans une position de moulage ;
- la figure 6 est une vue en perspective d'un détail d'une deuxième variante de réalisation du projecteur selon l'invention.

Sur les différentes figures, les mêmes références désignent des éléments identiques ou similaires.

Traditionnellement, un véhicule comporte deux projecteurs avant 10 munis d'une glace frontale 12 assemblée avec une zone frontale d'un boîtier 14.

Le boîtier 14 délimite une cavité interne. La cavité renferme, au moins dans une zone arrière du boîtier, un réflecteur et une lampe dont un culot est monté dans une douille supportée par le boîtier. La douille étant raccordée à un connecteur.

La glace 12 est visible de l'extérieur et laisse passer la lumière émise dans la cavité. Au moins la zone arrière du boîtier 14 est protégée par la carrosserie du véhicule, par exemple par une aile et un capot de compartiment moteur.

Une paroi 16 du boîtier 14, située à l'arrière de ce dernier, à l'opposé de la glace frontale 12, supporte la douille. Le connecteur (non représenté) est saillant à l'arrière de la paroi arrière 16. Dans le mode de réalisation de l'invention qui est représenté, la paroi arrière 16 est sensiblement verticale.

Le capot ménage un accès à l'intérieur du compartiment moteur à proximité des projecteurs, dans une zone permettant d'une part l'implantation d'un réservoir de lave glace, par exemple sous le projecteur et derrière un pare choc, et d'autre part de manipuler aisément un bidon pour remplir le réservoir.

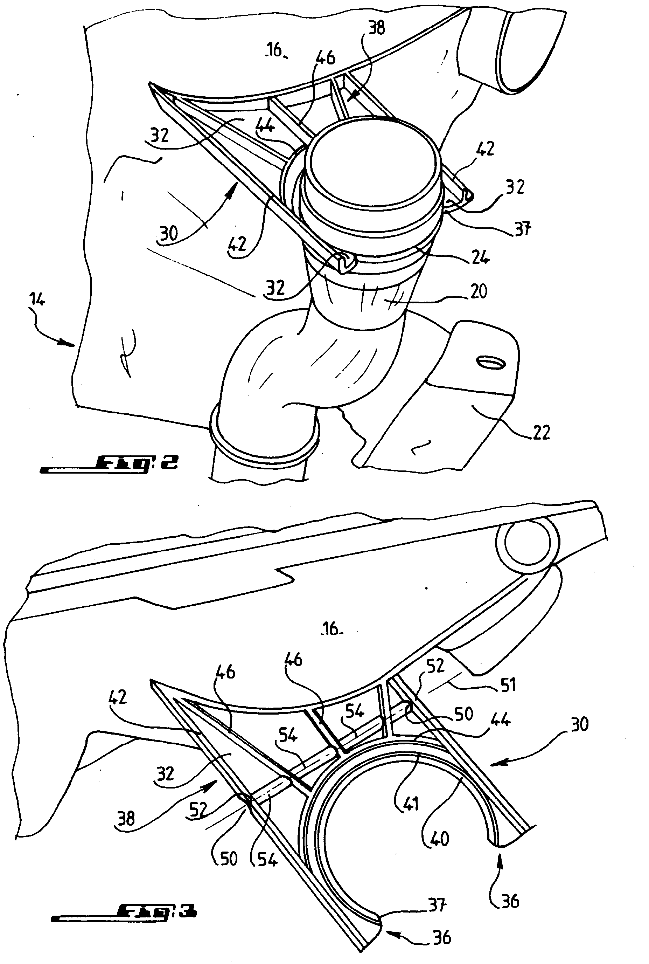

Afin de faciliter le remplissage, le réservoir comporte un conduit de remplissage 20 (figure 2), raccordé à un bocal de réserve (non représenté). Typiquement, le réservoir est obtenu par soufflage, le conduit 20 et le bocal étant une même pièce.

Un tel réservoir est, par exemple comme représenté à la figure 2, fixé sur une partie 22 de structure avant du véhicule supportant un pare choc, cette structure étant elle-même montée sur la caisse. Alternativement, le réservoir peut être fixé sur un longeron de la caisse du véhicule, le longeron étant une partie de structure du véhicule.

Pour faciliter le remplissage, le conduit s'étend par exemple verticalement à partir d'une paroi supérieure du bocal située sous le projecteur et jusqu'à un endroit du compartiment moteur qui est adjacent à une paroi supérieure du boîtier 14, à l'arrière de ce dernier, et qui est accessible lorsque le capot est ouvert.

Le conduit 20 comporte une portion tubulaire supérieure d'extrémité libre sensiblement verticale, ci-après dénommée tronçon d'extrémité libre, un tronçon coudé sous le tronçon d'extrémité libre et un tronçon inférieur vertical raccordé au bocal du réservoir. Au bout du tronçon d'extrémité libre, une ouverture de remplissage est obturée de manière connue par un bouchon amovible.

Le tronçon d'extrémité libre comporte sensiblement à moitié de sa hauteur une gorge 24 horizontale. La gorge est annulaire et sensiblement perpendiculaire à l'axe du tronçon d'extrémité libre.

Comme le conduit peut présenter une certaine souplesse, il est utile de le maintenir en position, par exemple pour éviter qu'il entre en contact avec le connecteur, qu'il frotte sur ce dernier en vibrant et qu'il puisse le détériorer.

Afin de maintenir le conduit en position à distance de la douille et du connecteur, le boîtier comporte une patte d'accrochage 30. La patte 30 est saillante à l'extérieur du boîtier, à l'opposé de la glace 12. La patte 30 est orientée sensiblement horizontalement, c'est-à-dire perpendiculairement à la paroi arrière 16.

La patte est distincte de bras de fixation 31 qui sont dédiés à la fixation du projecteur 10 dans le véhicule.

La patte 30 comporte une plaque 32 dont deux côtés externes sont rectilignes et parallèles.

Une échancrure 34 est découpée dans la plaque 32. Le contour de l'échancrure correspond à deux tiers de cercle.

La plaque 32 délimite l'échancrure 34 par deux branches latérales 36 s'étendant sensiblement parallèlement. Des ailes aux extrémités libres des branches délimitent un passage 37 au niveau de laquelle la plaque comporte un congé arrondi. Les branches délimitent conjointement un contour sensiblement en C.

A l'opposé du passage 37, les branches 36 sont raccordées entre elles et avec le reste du boîtier, c'est-à-dire avec la paroi arrière 16, par une zone de raccordement 38.

La plaque 32 présente une épaisseur réduite sur le pourtour de l'échancrure 34 de manière à former une bande d'accrochage 40 à la périphérie de l'échancrure. Un épaulement 41 est situé autour de la bande d'accrochage 40, au raccordement avec le reste de la plaque qui est plus épais que la bande 40.

La patte 30 comporte, parallèlement à chacun des côtés externes de la plaque 32, une première nervure verticale 42 qui est rectiligne et raccordée à sa base sur la plaque 32. La première nervure 42 est raccordée à une deuxième nervure verticale arquée 44, à distance du passage 37. La deuxième nervure 44 est parallèle au contour de l'échancrure 34, sur sensiblement un tiers de cercle. Entre la deuxième nervure 44 et la paroi arrière 16, la patte 30 comporte des nervures radiales 46.

Lorsque le projecteur est fixé dans le véhicule, et lorsque le bocal du réservoir est aussi fixé dans le compartiment moteur, le conduit 20 peut être assemblé avec le projecteur 10. A cette fin, il suffit de placer le tronçon d'extrémité libre du conduit 20 en regard de la patte 30 qui est en position de service, puis de faire entrer le conduit dans le passage 37 en engageant la bande 40 dans la gorge 24. Le congé au niveau du passage facilite l'entrée du conduit dans le passage. Lors de l'engagement, le conduit 20 se rétracte radialement et les branches 36 se déforment latéralement vers l'extérieur.

Ensuite, lorsque le conduit est en butée dans le fond de l'échancrure 34, le conduit reprend sa forme initiale et les branches se referment. Les ailes d'extrémité des branches retiennent alors le conduit 20 qui est emboîté dans l'échancrure 34.

Le conduit 20 étant accroché dans la patte 30, le tronçon d'extrémité libre est maintenu sensiblement perpendiculairement à la patte.

Avantageusement, le contour en C des branches permet, en intégrant les ailes d'accrochage, de réaliser l'accrochage simplement.

Avantageusement, la patte selon l'invention forme des moyens de fixation du réservoir en complément d'autres moyens de fixation le reliant à la structure du véhicule.

Dans la variante de réalisation de l'invention représentée aux figures 3 à 5, la patte 30 comporte une charnière 50 dans la zone de raccordement 38. L'axe 51 de la charnière 50 est sensiblement horizontal et perpendiculaire aux côtés externes de la patte 30.

La charnière 50 est formée par un lien de matière 52 en haut de chacune des nervures 42, 46. Le lien 52 est une portion des nervures dont la hauteur est amincie. Selon l'axe 51, des découpes 54 sont aménagées dans la plaque 32 entre les nervures pour permettre le pliage de la charnière. Une telle charnière est avantageusement facile à réaliser par moulage.

Dans ce mode de réalisation, la charnière 50 permet d'articuler la patte 30 par rapport au reste du boîtier 14 entre une position de moulage et une position de service.

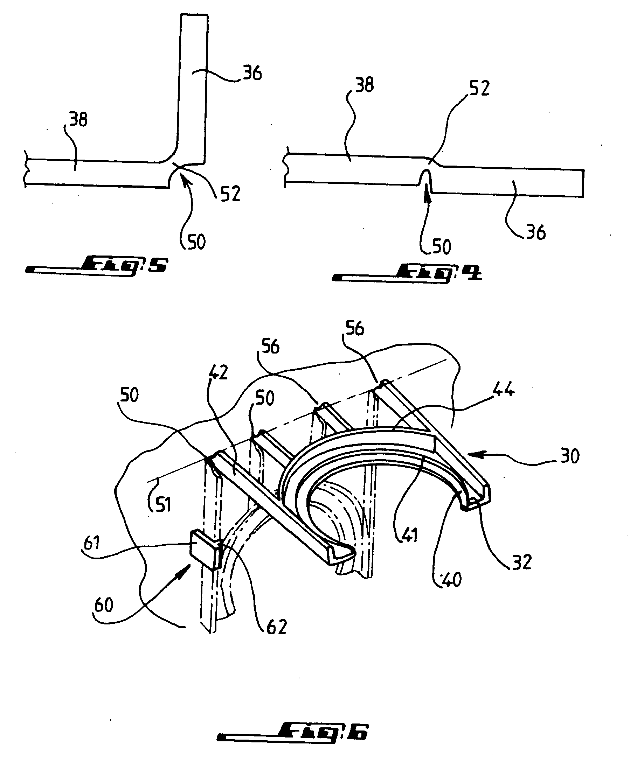

La position de service de la patte 30 est celle représentée aux figures 3 et 4. Dans cette position, la patte 30 est horizontale, sensiblement perpendiculaire à la paroi arrière 16 et sensiblement parallèle à une paroi supérieure du boîtier. Le tronçon d'extrémité supérieure du conduit 20 peut être maintenu sensiblement perpendiculairement à la patte.

La position de moulage de la patte 30 est celle représentée à la figure 5. Les branches 36 de la patte 30 sont orientées vers le haut, sensiblement parallèlement à la paroi arrière 16. Cette disposition permet par exemple le moulage du boîtier dans le cas d'une machine dans laquelle le démoulage doit se faire selon la direction horizontale du boîtier.

Dans la variante de réalisation de l'invention représentée à la figure 6, patte 30 comporte aussi une charnière 50.

Dans ce mode de réalisation, la charnière 50 est formée par la plaque 32 qui est pliable au droit d'entailles 56 creusées à partir du haut des nervures pour former une portion amincie de la patte.

Ici, la charnière 50 permet d'articuler la patte 30 par rapport au reste du boîtier 14 entre une position de service et une position repliée de stockage.

A la figure 6, la patte 30 est représentée en traits pleins dans sa position de service. La patte 30 est horizontale, sensiblement perpendiculaire à la paroi arrière 16.

Ici, le moulage du boîtier est effectué dans une machine dans laquelle le démoulage doit se faire selon la direction verticale du boîtier, quand la patte 30 est déployée en position de service.

A la figure 6, la patte 30 est représentée en traits pointillés dans sa position de stockage. Les branches 36 de la patte 30 sont orientées vers le bas, sensiblement parallèlement à la paroi arrière 16. La position repliée de stockage facilite la logistique et le conditionnement du projecteur en permettant le transport du projecteur alors qu'il est rendu compact.

Le boîtier comporte un crochet 60 de maintien de la patte 30 dans sa position repliée de stockage, par exemple pour éviter un déploiement indésirable de la patte lors de la manipulation du projecteur.

Le crochet 60 comporte une tige 61 flexible raccordée à la paroi arrière 16 à l'aplomb d'un bord vertical de l'une des nervures latérales 42 de la patte. Le crochet comporte un épaulement intérieur pour former une dent d'encliquetage 62 à son extrémité libre. La dent 62 est orientée vers la patte 30.

Dans la position repliée de stockage, la dent d'encliquetage 62 est en prise avec la tranche verticale d'une nervure latérale 42 de la patte qui est bloquée par l'épaulement.

La patte est facile à débloquer, pour la déployer en position de service, en appuyant latéralement sur la dent 62 avant ou après montage du projecteur dans le compartiment moteur.

Compte tenu des caractéristiques de l'invention exposées ci-dessus, cette dernière présente au moins les avantages exposés ci-après.

La patte étant intégrée au boîtier, le boîtier du projecteur selon l'invention est facile à mouler avec sa patte d'accrochage d'équipement.

Le réservoir est facile à mouler avec son conduit de remplissage.

La patte étant saillante par rapport à une paroi arrière de la zone arrière du boîtier, à l'opposé de la zone frontale, elle permet le maintien de l'équipement à distance d'une douille de lampe et d'un connecteur sur lequel il ne faut pas que l'équipement puisse frotter en vibrant.

Du fait de la présence de la charnière, la position de la patte peut être ajustée, par exemple pour faciliter le montage.

La charnière permet d'éviter que la présence de la patte, venant de moulage avec le boîtier, ne pose des contraintes de positionnement de plan de joint ou de mise en oeuvre de tiroir.

Les branches dont le contour est en C, avec des extrémités d'accrochage, permettent une fixation rapide de type encliquetage du conduit sur le projecteur, tout comme un démontage aisé en cas de besoin. Il peut aussi y avoir rattrapage dimensionnel éventuel par élasticité de la patte et/ou du conduit. Une forme de contour autre que celle en C peut être prévue en variante, tout en conservant des ailes d'accrochage ou autres moyens d'accrochage sur les branches.

Le volume du boîtier du projecteur selon l'invention n'est pas influencé par la présence de la patte, ni par son implantation dans la zone arrière. De plus, l'emplacement de la patte sur la paroi de la zone arrière peut varier indépendamment de la forme du boîtier ou du réflecteur que le boîtier accueille.

La patte étant placée à l'extérieur du périmètre du boîtier, il est possible, même dans le cas où l'équipement est un réservoir de lave glace, de se passer de moyens d'étanchéités entre la portion tubulaire de remplissage du réservoir et le boîtier, la portion tubulaire étant hors dudit périmètre. De plus, l'emplacement du bocal du réservoir dans le compartiment moteur n'est pas dicté par la coopération du conduit de remplissage avec le projecteur.

La patte permet d'utiliser le projecteur comme moyen de fixation de l'équipement constitué par le réservoir, sans utiliser de pièce de fixation supplémentaire.

## Revendications

1. Projecteur (10) de véhicule comportant un boîtier (14) délimitant une cavité interne prévue pour recevoir une source lumineuse, le boîtier comportant une zone frontale de passage de lumière et une zone arrière prévue pour être couverte par une carrosserie, le projecteur étant destiné à être monté au voisinage d'une portion tubulaire d'un équipement (20) du véhicule distinct du projecteur, telle qu'un conduit de remplissage d'un réservoir de liquide de lave glace, **caractérisé en ce que** le boîtier (14) comporte une patte d'accrochage (30) de la portion tubulaire (20), la patte (30) étant intégrée au boîtier (14) et saillante par rapport à une paroi (16) de la zone arrière pour recevoir et maintenir la portion tubulaire sensiblement perpendiculairement à la patte, la patte comportant en outre une zone de raccordement (38) avec le reste du boîtier (14), la zone de raccordement comportant une charnière (50).

2. Projecteur selon la revendication précédente, dans lequel la patte (30) comporte deux branches (36) délimitant conjointement un contour sensiblement en C et prévues pour emboîter la portion tubulaire.

3. Projecteur selon l'une quelconque des revendications précédentes, dans lequel la charnière (50) est une portion amincie de la zone de raccordement (38).

4. Projecteur selon l'une quelconque des revendications précédentes, dans lequel la patte (30) est articulée par la charnière (50) entre une position de service et une position repliée de stockage.

5. Projecteur selon la revendication précédente, dans lequel le boîtier (14) comporte un crochet de maintien (60) de la patte (30) dans sa position repliée de stockage.

6. Projecteur selon l'une quelconque des revendications précédentes, dans lequel la patte (30) est articulée par la charnière (50) entre une position de moulage et une position de service.

7. Projecteur selon l'une quelconque des revendications précédentes **caractérisé en ce que** le boîtier du projecteur est moulé avec la patte (30).

8. Sous-ensemble de véhicule comportant un projecteur (10) selon l'une quelconque des revendications précédentes et un équipement (20) distinct du projecteur (10), dans lequel l'équipement comporte une portion tubulaire qui coopère par emboîtement avec la patte d'accrochage (30).

9. Sous-ensemble selon la revendication précédente, dans lequel, l'équipement (20) est d'une part fixé sur le projecteur (10) par l'intermédiaire de la patte d'accrochage (30) et d'autre part relié à une partie de structure (22) du véhicule.

10. Sous-ensemble selon la revendication précédente, dans lequel l'équipement est un réservoir de fluide et la partie tubulaire est un conduit de remplissage.

## Claims

1. A vehicle headlight (10) comprising a housing (14) defining an inner cavity for receiving a light source, the housing comprising a front light passage area and a rear area intended to be covered by a body, the headlight being intended to be mounted in the vicinity of a tubular portion of an piece of equipment (20) of the vehicle separate from the headlight, such as a windscreen washer fluid tank filling conduit, **characterised in that** the housing (14) comprises a tab (30) for fastening the tubular portion (20), the tab (30) being built in the housing (14) and protruding from a wall (16) of the rear area to receive and keep the tubular portion substantially perpendicular to the tab, the tab further comprising area (38) for connecting with the remainder of the housing (14), the connection area comprising a hinge (50).

2. The headlight according to the above claim, wherein the tab (30) comprises two arms (36) jointly defining a substantially C-shaped outline and designed to fit together with the tubular portion.

3. The headlight according to any of the above claims, wherein the hinge (50) is a tapered portion of the connection area (38).

4. The headlight according to any of the above claims, wherein the tab (30) is jointed by the hinge (50) between an operating position and a stowed storage position.

5. The headlight according to the preceding claim, wherein the housing (14) comprises a hook (60) for holding the tab (30) in the stowed storage position thereof.

6. The headlight according to any of the above claims, wherein the tab (30) is jointed by the hinge (50) between a moulding position and an operating position.

7. The headlight according to any of the above claims, **characterised in that** the headlight housing is moulded with the tab (30).

8. A vehicle subassembly comprising a headlight (10) according to any of the above claims and piece of equipment (20) separate from the headlight (10), wherein the piece of equipment comprises a tubular portion cooperating by fitting with the fastening tab (30).

9. The subassembly according to the preceding claim, wherein the piece of equipment (20) is attached to the headlight (10) by means of the fastening tab (30), and connected to a structural portion (22) of the vehicle.

10. The subassembly according to the preceding claim, wherein the piece of equipment is a fluid tank and the tubular portion is a filling conduit.

## Patentansprüche

1. Fahrzeugscheinwerfer (10), umfassend ein Gehäuse (14), das eine Innenhöhlung begrenzt, die zum Aufnehmen einer Lichtquelle vorgesehen ist, wobei das Gehäuse einen Frontbereich zum Durchlassen des Lichtes und einen rückwärtigen Bereich umfasst, der vorgesehen ist, um von einer Karosserie abgedeckt zu werden, wobei der Scheinwerfer dazu bestimmt ist, in der Nähe eines röhrenförmigen Abschnittes einer Fahrzeugausrüstung (20) befestigt zu werden, die vom Scheinwerfer verschieden ist, wie etwa eine Füllleitung für einen Scheibenwaschmittelbehälter, **dadurch gekennzeichnet, dass** das Gehäuse (14) eine Einhaklasche (30) für den röhrenförmigen Abschnitt (20) umfasst, wobei die Lasche (30) in das Gehäuse (14) integriert ist und in Bezug auf eine Wandung (16) des rückwärtigen Bereiches vorspringt, um den röhrenförmigen Abschnitt im Wesentlichen senkrecht zur Lasche aufzunehmen und festzuhalten, wobei die Lasche ferner einen Verbindungsbereich (38) zum übrigen Gehäuse (14) umfasst, wobei der Verbindungsbereich ein Scharnier (50) umfasst.

2. Scheinwerfer nach dem vorhergehenden Anspruch, wobei die Lasche (30) zwei Schenkel (36) umfasst, die zusammen eine im Wesentlichen C-förmige Kontur begrenzen und zum Einfügen des röhrenförmigen Abschnittes vorgesehen sind.

3. Scheinwerfer nach einem der vorhergehenden Ansprüche, wobei das Scharnier (50) ein verschmälerter Abschnitt des Verbindungsbereiches (38) ist.

4. Scheinwerfer nach einem der vorhergehenden Ansprüche, wobei die Lasche (30) über das Scharnier (50) gelenkig zwischen einer Betriebsposition und einer zusammengeklappten Lagerposition gelagert ist.

5. Scheinwerfer nach dem vorhergehenden Anspruch, wobei das Gehäuse (14) einen Haken zum Festhalten (60) der Lasche (30) in ihrer zusammengeklappten Lagerposition umfasst.

6. Scheinwerfer nach einem der vorhergehenden Ansprüche, wobei die Lasche (30) über das Scharnier (50) gelenkig zwischen einer Umformungsposition und einer Betriebsposition gelagert ist.

7. Scheinwerfer nach einem der vorhergehenden Ansprüche, **dadurch gekennzeichnet, dass** das Gehäuse des Scheinwerfers mit der Lasche (30) umformt wird.

8. Teilbaugruppe eines Fahrzeugs, umfassend einen Scheinwerfer (10) nach einem der vorhergehenden Ansprüche und eine Ausrüstung (20), die vom Scheinwerfer (10) verschieden ist, wobei die Ausrüstung einen röhrenförmigen Abschnitt umfasst, der durch Einfügen mit der Einhaklasche (30) zusammenwirkt.

9. Teilbaugruppe nach dem vorhergehenden Anspruch, wobei die Ausrüstung (20) einerseits über die Einhaklasche (30) am Scheinwerfer (10) befestigt ist und andererseits mit einem Teil (22) der Fahrzeugstruktur verbunden ist.

10. Teilbaugruppe nach dem vorhergehenden Anspruch, wobei die Ausrüstung ein Fluidbehälter ist und der röhrenförmige Abschnitt eine Füllleitung ist.
